# EUROPEAN PATENT SPECIFICATION

(11) **EP 1 805 570 B1**
(45) Date of publication and mention of the grant of the patent: **08.04.2009**
(21) Application number: 04769541.6
(22) Date of filing: 04.10.2004
(51) Int. Cl.: G06F 21/00

(54) **METHODS FOR IMPROVED AUTHENTICITY AND INTEGRITY VERIFICATION OF SOFTWARE AND DEVICES CAPABLE FOR CARRYING OUT THE METHODS**
VERFAHREN ZUR VERBESSERTEN AUTHENTIFIZIERUNG UND INTEGRITÄTSPRÜFUNG VON SOFTWARE UND VORRICHTUNGEN ZUM AUSFÜHREN DER VERFAHREN
PROCEDES PERMETTANT D'EFFECTUER UNE MEILLEURE VERIFICATION DE L'AUTHENTICITE ET DE L'INTEGRITE DE LOGICIELS, DISPOSITIFS CAPABLES DE METTRE EN OEUVRE LES PROCEDES

(43) Date of publication of application: 11.07.2007
(73) Proprietor: Nokia Corporation, 02150 Espoo (FI)
(72) Inventor: FRIJTERS, Dirk, D-58454 Witten (DE); ROSS, Andree, D-44534 Luenen (DE); GASCHLER, Dirk, D-42929 Wermelskirchen (DE)
(74) Representative: Becker Kurig Straus
(86) International application number: PCT/IB2004/003217
(87) International publication number: WO 2006/038051

(56) References cited:
- WO-A1-03/036862
- US-A1- 2002 157 002
- US-A1- 2003 200 176
- US-A1- 2004 133 785

## Description

The present invention relates in general to the field of authenticity and integrity verification of arbitrary data content. In particular, the present invention relates to the field of software authenticity and integrity verification, especially to enable to prevent the installation and execution of software being modified by an unauthorized third party.

An increasing part of today's economy in industrialized states makes profits with distribution of intellectual content, in particular digital content, which may as an exemple include music, videos, images, software, electronic books and the like. Although such content and its usage are protected by law, effective technical provisions have to be put in place to prevent misuse and unauthorized usage of such content; in view of the fact that the digital nature of the content enables fast and identical reproduction of copies, which can be easily shared with an enormous amount of unauthorized users over the Internet around the world.

Nevertheless, the Internet, which promotes illegal content sharing, represents one of the major marketing media with an increasing importance and wide acceptance. Digital right management (DRM) technologies have been introduced to enable the employment of the Internet as a marketing medium while ensuring to observe usage rights claimed by the content owners. Fundamentally, digital right management technologies address the authentication of the digital content, the authentication of the digital content source, the integrity of the digital content as well as the usage rights limitations and observance. The authentication and integrity of digital content is not only an integral part of digital rights management in the fundamental manner described above but supports also a business model, which is commonly known with gaming terminals and gaming consoles, respectively, representing typically processor-based terminals with controlled application execution functionality. In this business model economic profit is achieved by giving licences to software developers enabling them to develop and sell applications adapted to be operated on those execution-controlled terminals. Moreover, authentication and integrity of digital content also protects the user from manipulated digital content, which may include particular code sections, which do not stem from the original code.

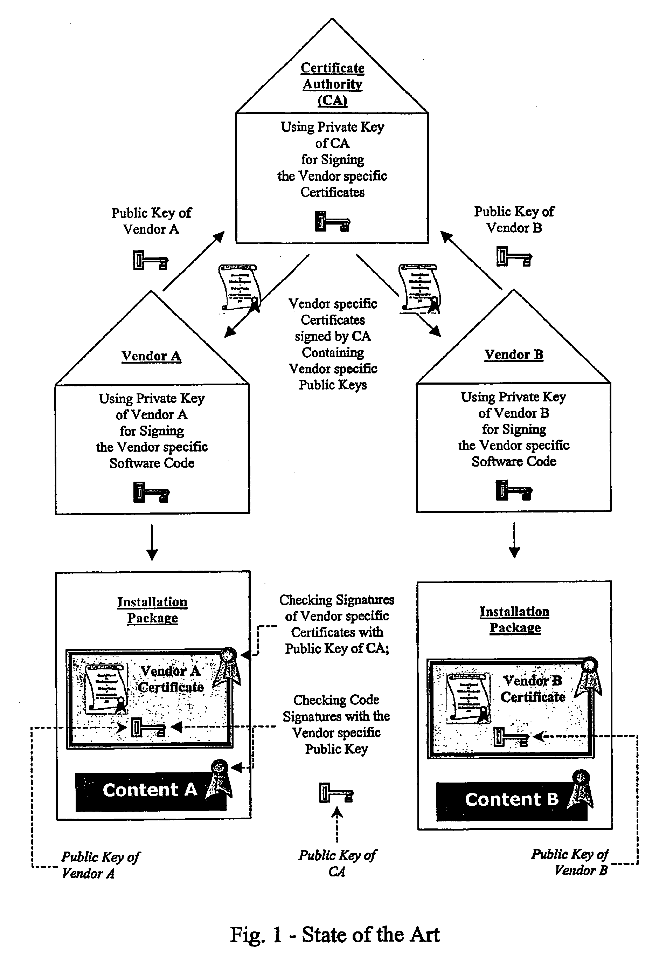

With reference to Fig. 1 a typical public key infrastructure of the state of the art shall be presented, which enables validation of the authentication and integrity of digital content. The illustrated public key infrastructure includes exemplarily a certificate authority (CA) representing a trusted root certificate authority, a first vendor A, and a second vendor B, respectively. For the way of illustration, the vendors A and B provide installation packages A and B, respectively, which installation packages may for instance enable a user to install corresponding vendor specific applications on a processor-based terminal or device. Each installation package includes the installation content (i.e. the installation content A and B, respectively) required for installing the vendor specific application, which installation code is signed by the vendor by the means of a code signature and a vendor specific certificate (i.e. a vendor A specific certificate and a vendor B specific certificate, respectively), which vendor specific certificate is signed by the certificate authority (CA).

In accordance with asymmetric public key technology, each of the certification authority (CA), the vendor A, and the vendor B is in possession of a public and private key pair. In accordance with the naming, a pubic key is for public distribution, whereas a private key is a secret, which knowledge has to be kept by the owner. The asymmetry entails that the keys are separate but form an integrated key pair. Each key is one way, meaning that a key of the key pair used to encrypt information can not be used for decryption.

The certification authority (CA) serves as trusted third party who creates certificates that consist of assertions on various attributes and binds them typically to their public key. This means, a certificate is conventionally an electronic document attached to a public key by a trusted third party, which provides proof that the public key belongs to a legitimate owner and has been compromised. Correspondingly, the vendors A and B obtain certificates from the certificate authority (CA) by transmitting its public keys to the CA and receiving corresponding certificates from the CA. Each vendor specific certificate includes a public key, certificate information and at least a digital signature of the certificate authority. In more detail, the certificate information comprises identity information about the owner of the public key such as name, user identification and the like. A digital signature represents an electronic identification of an authority by the means of a public key algorithm, which purpose of the digital signature is to enable a recipient of any data signed with a digital signature to verify the integrity of the data and to identify the sender of the data. Herein the at least one digital signature included in each vendor specific certificates enables the recipients of the certificates to verify identity of the certificate information and the identity of the certificate authority which has issued the certificate. The CA specific public key is required for verification. The code signature of the installation code serves analogously to enable verification of the installation code in view of its integrity and the identity of the signer. The verification of the code signature generated by the vendors requires the vendor specific public key.

In the context of the installation of the application in accordance with an installation package of vendor A or vendor B, the authentication and integrity of the installation content is verified on the basis of the signed certificate and the signature included in the installation package. Without restriction of the generality, it shall be assumed that the application installation is operated on a processor-based device or terminal having stored the CA specific public key or being capable to obtain the CA specific public key.

With reference to the installation package provided by vendor A, the digital signature of the vendor specific certificate issued and signed by the certificate authority is verified by the means of the CA specific public key available by the processor-based device running the installation procedure. In case of validation of the signature of the vendor specific certificate, the vendor specific public key and the certificate information are authenticated and any unauthorized or different manipulation can be excluded. This means, the vendor specific is now available on the processor-based device. Next, the authentication and integrity is verified by verifying the validity of the code signature with the help of the authenticated vendor specific public key obtained from the vendor specific certificate.

In case of confirmed validity of the code signature, the installation content A is authenticated and its integrity is established, i.e. the installation content is validated as trusted code. The actual installation process may be initiated in the knowledge that the application resulting form the installation originates from the authenticated source defined in the certificate and the installation content is unchanged.

The authenticity and integrity verification may be implemented in a specific separate verification instance operated on the processor-based device or may be included in the installation content in form of executable code forming a dedicated verification instance such as disclosed in US 2003 0156719 A1.

Those skilled in the art will appreciate that the aforementioned explanation referring to the installation package of vendor A applies likewise to the installation package provided by vendor B.

Although the majority of authentication and integrity verifications are operated in the aforementioned manner, the above described state of the art procedure implies serious drawbacks referring to unauthorized manipulations. When assuming that a vendor specific private key gets compromised, the compromised vendor specific private key enables an unauthorized party being in possession thereof to modify any digital content originally signed with vendor specific private key for integrity validation and to re-sign the modified content with that compromised vendor specific private key resulting in a valid signed, trusted content. Even worse, the knowledge about a vendor specific private key can be made unauthorized use of to substitute a valid original vendor specific certificate of another vendor with the certificate, which belongs to and is associated with the compromised vendor specific private key, respectively.

The object of the present invention resides in enabling an improved authenticity and integrity verification. The solution of the object is based on data objects being composed with the data content to be verified, which data objects include information for enabling authenticity and integrity verification, which objects are linked together by the help of linkage information, which prevents or at least hinders unauthorized party in modification on the data content. The linkage information serves to bind the data objects and information contained therein, respectively, to the data content to be verified.

The skilled reader will appreciate that the inventive concept overcomes the disadvantages stated above in detail and provides additionally advantages to the user of the inventive concept. In particular, the linkage or bounding serves to bind / link an originator specific certificate to the data content. Consequently, an exchange of the certificate and signature as described above with the help of a compromised private key is prevented. This implies that also the data content (software) of other vendors cannot be modified with the help of compromised private key. The authenticity and integrity of the data content provided by the other vendors can be still guaranteed even in case of a compromised private key, as long as the linkage defined above is not broken.

Two different aspects of the present invention are defined in independent method claims 1 and 11, respectively. Further two aspects of the invention are defined in independent apparatus claims 22 and 24, respectively. Further embodiments of the invention are specified in the respective appended dependent claims.

In accordance with a first aspect of the present invention, a method for improved authenticity and integrity verification of a content package is provided. The content package comprises at least an originator specific certificate, an access limited data object and data content to be verified for authenticity and integrity. The originator specific certificate and the access limited data object are linked together via a first linkage information, which establishes a first linkage between the originator specific certificate and the access limited data object. The access limited data object and the data content are linked together via a second linkage information, which establishes a second linkage between the access limited data object and the data content. The first linkage information is extracted from the originator specific certificate and it is checked whether the first linkage information links to the access limited data object including corresponding first linkage information. Then a hash code is extracted from the access limited data object, which hash code serves as second linkage information. The extracted hash code is verified against a determined hash code by comparing the extracted and determined hash codes. The determined hash code is obtained on the basis of a hash algorithm, which is applied on the data content. Hence, the verifying includes verifying the second linkage; and verifying authenticity and integrity of the data content.

According to an embodiment of the invention, content package is associated with a rights object, which contains a content encryption key. The access limited data object contains the hash code in an encrypted form, which encrypted form requires the content encryption key for recovering by decryption. Hence, the extraction of the hash code from the access limited data object comprises a decrypting of the hash code on the basis of the content encryption key.

According to an embodiment of the invention, the content encryption key serves as a third linkage information, which establishes a third linkage between the rights object and the access limited data object.

According to an embodiment of the invention, it is checked whether the associated rights object is available.

According to an embodiment of the invention, the checking of the availability of the associated rights object includes an identification of the associated rights object on the basis of association information being contained in the access limited data object and the rights object. The association information may be formed of an information relating to the content, a content identifier, an information relating to the originator, or an originator identifier.

According to an embodiment of the invention, the originator specific certificate is tested against a trusted root certificate in order to ensure authenticity and integrity of the originator specific certificate.

According to an embodiment of the invention, the rights object is digitally signed by the means of a signature. Hence, it is checked whether the signature of the rights object matched with a corresponding certificate. The corresponding certificate may be the originator specific certificate or a rights issuer specific certificate. The rights issuer entity issues the rights object.

According to an embodiment of the invention, the first linkage information is represented by an information relating to an originator, or an originator identifier. The first linkage information is contained in both the originator specific certificate and the access limited data object.

According to an embodiment of the invention, the content package is an installation package, which includes installation content representing the data content. The installation content enables an installation of an application on a processor-based device for being executed thereon.

According to an embodiment of the invention, the content encryption key is verified to ensure that the content encryption key is applicable for decrypting the hash code. The verification can be based on a check sum information enables a verification of the decrypted hash code. In case a determined check information determined from the decrypted hash code and a check information for instance contained in the access limited data object match the content encryption key (CEK) is valid.

In accordance with a second aspect of the present invention, a method for creating a content package enabling improved authenticity and integrity verification of the content package is provided. A data content to be verified for authenticity and integrity is provided and a hash code is obtained from the data content in accordance with a hash code algorithm. Additionally, an originator specific certificate is provided. An access limited data object including the hash code and a first linkage information is generated. The first linkage information links the originator specific certificate and the access limited data object together. The first linkage information establishes a first linkage between the originator specific certificate and the access limited data object. The hash code serves as second linkage information, which second linkage information links the access limited data object and the data content together. The second linkage information establishes a second linkage between the access limited data object and the data content. The originator specific certificate, the access limited data object, and the data content are composed to form the content package for distribution.

According to an embodiment of the invention, a rights object is created. The rights object contains a content encryption key, which is employed for encrypting the hash code, wherein the hash code is included in the access limited data object in an encrypted form.

According to an embodiment of the invention, the content encryption key serves as a third linkage information, which establishes a third linkage between the rights object and the access limited data object.

According to an embodiment of the invention, association information is included in the rights object, on the basis of which the rights object is identifiable. The association information includes an information relating to the content, a content identifier, an information relating to the originator, or an originator identifier.

According to an embodiment of the invention, the rights object is digitally signed by inclusion of a signature.

According to an embodiment of the invention, the first linkage information is an information relating to an originator, or an originator identifier. The first linkage information is contained in both the originator specific certificate and the access limited data object.

According to an embodiment of the invention, the content package is an installation package, which includes installation content, which represents the data content. The installation content enables to install an application on a processor-based device for being executed thereon.

According to a third aspect of the invention, computer program product capable to improve authenticity and integrity verification of a content package is provided. The computer program product comprises program code sections for carrying out the steps of the method according to an aforementioned embodiment of the invention, when the program is run on a controller, processor-based device, a computer, a terminal, a network device, a mobile terminal, or a mobile communication enabled terminal. Alternatively, an application specific integrated circuit (ASIC) may implement one or more instructions that are adapted to realize the aforementioned steps of the method of an aforementioned embodiment of the invention, i.e. equivalent with the aforementioned computer program product.

According to a fifth aspect of the invention, a computer program product is provided, which comprises program code sections stored on a machine-readable medium for carrying out the steps of the method according to an aforementioned embodiment of the invention, when the computer program product is run on a controller, processor-based device, a computer, a terminal, a network device, a mobile terminal, or a mobile communication enabled terminal.

According to a sixth aspect of the invention, a computer data signal embodied in a carrier wave and representing instructions is provided which when executed by a processor cause the steps of the method according to an aforementioned embodiment of the invention to be carried out.

In accordance with an seventh aspect of the present invention, a verification apparatus for improved authenticity and integrity verification of a content package is provided. The content package comprises at least an originator specific certificate, an access limited data object and data content to be verified for authenticity and integrity. The originator specific certificate and the access limited data object are linked together via a first linkage information, which establishes a first linkage between the originator specific certificate and the access limited data object. The access limited data object and the data content are linked together via a second linkage information, which establishes a second linkage between the access limited data object and the data content, a certificate parser is adapted to extract the first linkage information from the originator specific certificate. A DCF data object parser is adapted to extract the first linkage information and a hash code from the access limited data object. The hash code serves as second linkage information. A linkage verification module is adapted to compare the first linkage information, extracted for the originator specific certificate and the access limited data object, for linkage verification. A hash code generator is adapted to determine a hash code from the data content in accordance with a hash algorithm. And finally, a comparator is adapted to compare the hash codes extracted from the access limited data object and determined on the basis of the data content to enable verification of the second linkage and authenticity and integrity verification of the data content.

According to an embodiment of the present invention, the verification apparatus is implemented in a consumer electronic device and in particular a processor-based consumer electronic device.

In accordance with a ninth aspect of the present invention, a generator apparatus for creating a content package enabling improved authenticity and integrity verification of the content package is provided. A hash code generator is adapted to determine a hash code from a data content in accordance with a hash code algorithm. A DCF data object generator is adapted to create an access limited data object including the hash code and a first linkage information. The first linkage information links the originator specific certificate and the access limited data object together. The first linkage information establishes a first linkage between the originator specific certificate and the access limited data object. The hash code serves as second linkage information. The second linkage information links the access limited data object and the data content together. The second linkage information establishes a second linkage between the access limited data object and the data content. A package composer is adapted to compose an originator specific certificate, the access limited data object, and the data content to form the content package for distribution. The originator specific certificate is provided for inclusion.

According to an embodiment of the present invention, the generator apparatus is implemented in a sever system entity and in particular a processor-based server system entity.

In accordance with another aspect of the present invention, a system enabling content packages allowing improved authenticity and integrity verification is provided. The system comprises at least a generator module according to one of the aforementioned embodiments and a verification module according to one of the aforementioned embodiments.

In the following, the present invention will be described in greater detail with reference to embodiments and the accompanying drawings, in which
- Fig. 1: illustrates a typical state of the art public key infrastructure (PKI) with exemplary attending entities;
- Fig. 2a: illustrates an installation package according to an embodiment of the present invention;
- Fig. 2b: illustrates exemplary objects and their contents of the installation package shown in Fig. 2a according to an embodiment of the invention;
- Fig, 2c: illustrates exemplary a structure of a DCF data object shown in brief in Figs. 2a and 2b according to an embodiment of the invention;
- Fig. 3a: illustrates an operational sequence for verifying the authenticity and integrity of an installation package according to an embodiment of the present invention;
- Fig. 3b: illustrates an operational sequence for composing an installation package According to an embodiment of the present invention
- Fig.4a: illustrates a first exemplary system infrastructure operable in accordance with an embodiment of the present invention;
- Fig, 4b: illustrates a second exemplary system infrastructure operable in accordance with an embodiment of the present invention;
- Fig. 5a: illustrates a block diagram of a CE device, at which the verification of the installation package is operable in accordance with an embodiment of the present invention; and
- Fig. 5b: illustrates a block diagram of a computer system, at which the composition of the installation package is operable in accordance with an embodiment of the present invention;
- Fig. 6a: illustrates a block diagram of an verification agent capable for performing the operational sequence shown Fig. 3a according to an embodiment of the present invention; and
- Fig. 6b: illustrates a block diagram of an installation package toolkit capable for performing the operational sequence shown Fig. 3b according to an embodiment of the present invention.

Throughout the detailed description and the accompanying drawings same or similar components, units, or devices will be referenced by same reference numerals for clarity purposes. In order to enlighten more detailed the solution of the present invention in view of the current state of the art, firstly back reference should be given to Fig. 1, on the basis of which authenticity and integrity verification by the means of a public key infrastructure (PKI) system is conventionally operable.

A signature within public key infrastructure systems is typically based on a one-way hash function. The one-way hash function accepts an input of arbitrary data and length and generates a so-called message digest with a bit-sequence fixed length. For cryptographic use, the hash function is selected such that, if input data is modified in any way, the message digests which are generated by applying the hash function to the original input data and the modified input data, respectively, differ from each other, preferably entirely. Consequently, a message digest is applicable for verification of the integrity of any digital data.

A plaintext message digest would enable an unauthorized user to modify the digital data, from which the message digest has been derived, manipulate the original digital data and re-compute a new message digest on the basis of the modified digital data to feign integrity of the modified original data. Hence, message digest has to be secured, which is conventionally achieved by encrypting the message digest with a private key. The encrypted message digest is designated as signature. A recipient, who wishes to verify the integrity of any data sequence, which is received in conjunction with a signature, decrypts the signature with the help of a public key, which forms in conjunction with the private key used for encryption of the message digest the asymmetric public encryption key pair, to obtain the message digest. Next, the recipient determines itself the message digest of the received data sequence by applying the same hash function thereto and compares the message digest resulting from the decrypted signature and the self determined message digest.

Those skilled in the art will immediately appreciate in case of a compromised private key and due to the public availability of the public key that any unauthorized user being in knowledge about the compromised private key is able to re-sign any data sequence including modifications compared with the original one with a valid signature. With reference back to the description referring to Fig. 1, skilled persons will also understand that in case of a compromised private key (i.e. vendor specific private key, which is employed for signature decryption to gain the message digest) the user of the processor-based device, n which the verification procedure is carried out, is lulled into a false sense of security because of the validation of the public key on the basis of the vendor specific certificate.

The deficiency of the conventional digital signature is fundamentally based on the missing linkage between signature and certificate, which allows to evade the authenticity and integrity verification.

It shall be noted that the realization and implementation of a hash function and problems caused by the realization and implementation thereof (e.g. so-called hash collisions) are out of the scope of the present invention.

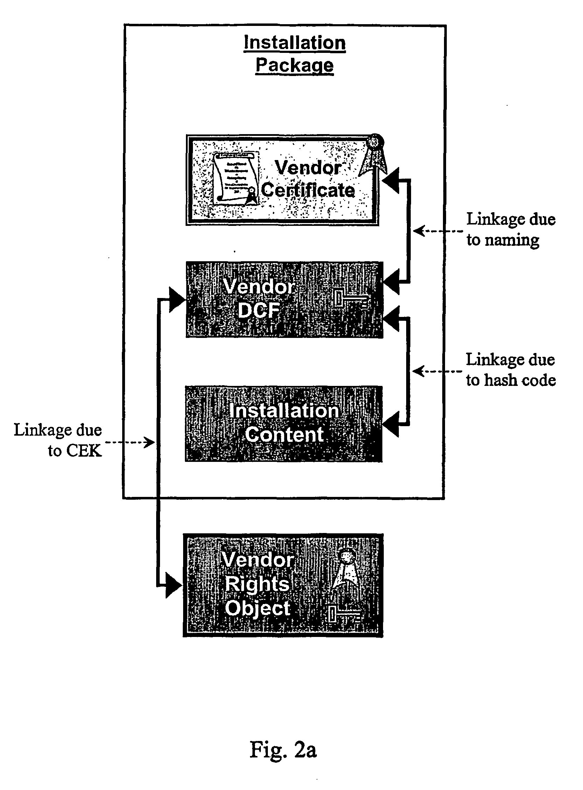

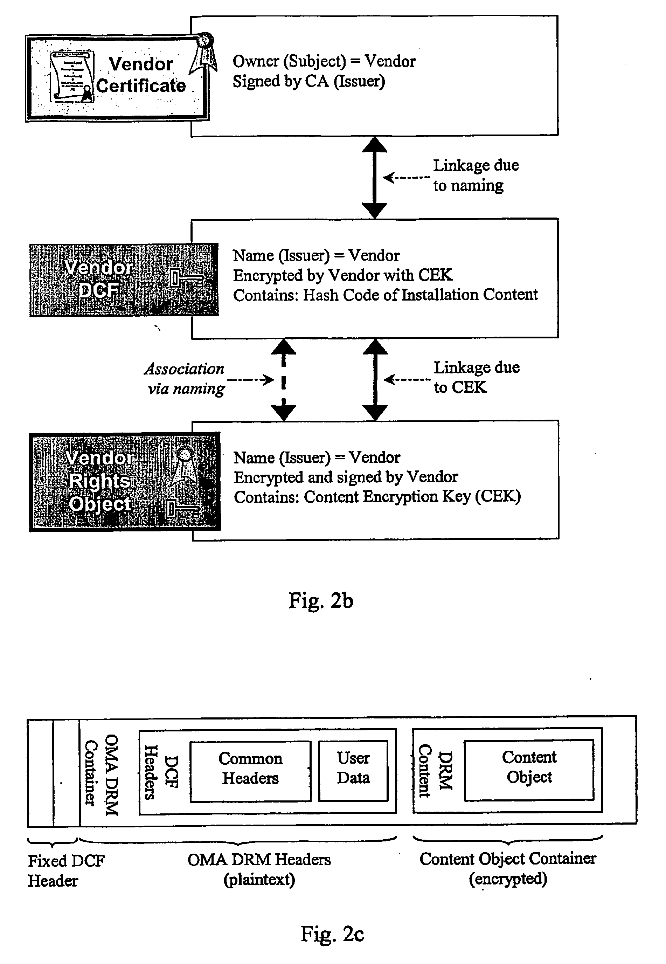

Fig. 2a illustrates an installation package according to an embodiment of the present invention, which installation package comprises several included and accompanying object entities, which are linked with each other and by the means of which authenticity and integrity verification is operable. In detail, the installation package according to the illustrated embodiment of the invention includes a vendor specific certificate, a vendor specific DRM content format (DCF) data object and installation content. Additionally, the installation package is accompanied by a vendor rights object. To overcome the aforementioned deficiency of state of the art integrity and authenticity verification, the data objects illustrated in Fig. 2a are linked together to form dependency chained objects; i.e. the objects are linked together on the basis of information entities included in the objects. In order to understand the linkages of the objects, which linkages improve the security of the authenticity and integrity verification, reference should be also given to Fig. 2b, which individual illustrations represent parts of the information included in the respective object entities.

With reference to the vendor specific certificate, such a certificate comprises among others an owner or subject field, which contains an identification of the publisher of the certificate, who is herein the vendor identified by the means of a vendor identifier, preferably an unambiguous /unique vendor identifier. The content of the certificate is signed by the CA for authenticity and integrity proof. In more detail, for instance with reference to the X.509 digital certificate ITU-T standard for PKI (public key infrastructure) and in particular to the IETF's profile of the X.509 v3 certificate standard as specified in RFC 3280, a certificate may include the following mandatory and optional entries:
■ Certificate
   o Version
   o Serial Number
   o Algorithm ID
   o Issuer
   o Validity
      - Not Before
      - Not After
   o Subject
   o Subject Public Key Info
      - Public Key Algorithm
      - Subject Public Key
   o Issuer Unique Identifier (Optional)
   o Subject Unique Identifier (Optional)
   o Extensions (Optional)
      ...
■ Certificate Signature Algorithm
■ Certificate Signature

The certificate can be encoded according to various encoding standards, including for instance XML (extensible markup language) encoding and WBXML (wireless binary extensible markup language) encoding.

The vendor specific DRM content format (DCF) data object is structured in accordance with the Open Mobile Alliance (OMA) specifications, which define industry-wide interoperable mechanisms for developing applications and services that are deployed over wireless communication networks. The OMA Digital Rights Management (DRM) enables distribution and consumption of digital content in a copy/usage-controlled manner. Fig. 2c illustrates a corresponding high-level overview of the DCF format. The DCF structure format defined a header with a brand number and version fields, designated as fixed DCF header, which is immediately followed by an OMA DRM container. The OMA DRM container includes a DCF headers box and a content object container.

The DCF headers box, also designated as OMA DRM headers, includes common headers, which in turn comprises information relating to the vendor and the content, which is included as protected content in the content object container. In general, the common headers include among others following entries:
o Common headers version;
o Encryption method field, which defines how the protected (encrypted) content can be decrypted. Typically, the filed may specify that the content is not encrypted, the content is encrypted in accordance with an AES (Advanced Encryption Standard) symmetric encryption;
o Padding scheme field, which defines how the last block of ciphertext is padded;
o Plaintext length field, which defines the length of the original plaintext applicable for error check after decryption of the protected content;
o Content ID field, which contains a globally unique identifier for the content object.
o Rights Issuer LTRL field, which defines the Rights Issuer URL, which is applicable to be used by the consuming Device to obtain a rights object for the protected content.
o Textual headers, which may contain additional information about the content;
o Content URL header, which is employable to indicate a location for acquiring the DCF data object;
o Content version header, which is applicable to defines the version of the content;
o Content-location header, which is usable to indicate a relative location for the content object;
o Custom headers, which enables a content author to insert additional custom headers to the Textual Headers field.

It should be noted that the detailed specification of the DCF structure can be obtained from the standard documents provided by the Open Mobile Alliance (OMA), especially the current Release 2 "Digital Rights Management" specification [DRM-v2].

In accordance with Fig. 2b, the vendor specific DCF data object comprises in accordance with the present invention an issuer identification, i.e. herein the vendor identification, which is preferably part of the OMA DRM headers, and a hash code of the installation content, which is preferably contained in the content object. The content object should be encrypted by the means of a symmetric encryption key, which is herein designated as content encryption key (CEK), which is especially applicable in accordance with the AES symmetric encryption specified above.

The rights issuer is an entity that assigns permissions and constraints to DRM content, especially vendor specific DRM content format (DCF) data object, and generates one or more rights object, especially the vendor specific rights object, which is required to access the protected content of the vendor specific DRM content format (DCF) data object. A rights object is typically an XML encoded, likewise encoded or otherwise encoded document, which on the one hand expresses permissions and constraints associated with a piece of DRM content and which on the other hand contains information required for accessing, i.e. decrypting, the DRM content, which is encrypted for protection against unauthorized use. Herein the DRM content is the protected content contained in the vendor specific DCF data object, where the protected content is represented by the encrypted hash code of the installation code. With reference to Fig. 2b, the vendor specific rights object contains identification information about the issuer, i.e. herein the issuer identification and vendor identification, respectively, and the content encryption key (CEK), which is required for decrypting the protected content of the vendor specific DCF data object. For integrity and authenticity, the vendor specific rights object is encrypted and signed by the vendor.

In detail, the structure of the rights objects is based in accordance with the Open Mobile Alliance (OMA), especially the current Release 2 "Digital Rights Management" specification [DRM-v2], on the rights expression language (REL), which enables the definition of mobile rights profile in accordance with the "Open Digital Rights Language" (ODRL) standard. Rights are the collection of permissions and constraints defining under which circumstances access is granted to DRM content. The structure of the rights expression language enables the following functionality:
Metadata such as version and content ID
The actual rights specification consisting of
   Linking to and providing protection information for the content, and
   Specification of usage rights and constraints

Models are used to group rights elements according to their functionality, and thus enable concise definition of elements and their semantics. Different models can be used throughout the rights objects. A detailed description of the different models is out of the scope of the present invention. References should be given to the corresponding OMA specification. Nevertheless, a short introduction into the security model shall be given, which may relate to the vendor rights object as employed according to an embodiment of the present invention. Security issues constitute an important part of digital rights management systems. Especially, the security issues relate to following items:
Confidentiality for the content encryption key (CEK) of Rights Object;
Integrity of the association between Rights Object and DRM Content, i.e. between vendor specific rights object and vendor specific DCF data object; and
Rights Object integrity and authenticity

Enabling an authorized party to consume DRM content is similar to granting this party access to the confidential content. In other words, a party authorized to consume DRM content is let into the exclusive circle of parties deemed trustworthy enough to access the content. This concept is realized in by i) encrypting the content thus transforming it into DRM content, and ii) sharing the key(s) required to decrypt the DRM content only with those parties that are authorized to consume the content. DRM Content is protected by a symmetric algorithm (AES), i.e., the key used for decryption can be derived from the key used for encryption. Thus, henceforth, the key will be referred to as content encryption key (CEK). Note that the CEK might also be used to wrap another (intermediate) key that in turn encrypts the content. Encrypting the content defers content confidentiality to controlling the confidentiality of the CEK. Now, the security of the DRM system relies on the control of the CEK that must be kept secret from all unauthorized parties. The CEK necessary to decrypt the DRM content is contained in the rights object in encrypted form.

Those skilled in the art will appreciate on the basis of the description above that the association between vendor specific DCF data object and vendor specific rights object has to be protected. Typically, the integrity of the association between rights object and DRM content is handled similarly to enforcing the integrity of rights objects. The rights objects are signed by their issuer to prevent manipulations of the rights objects as well as the association between rights objects and DRM content.

Again referring to Fig. 2a, the dependency chain established between the objects comprises and accompanying the installation package can be understood. The vendor specific certificate and the vendor DCF data object containing the hash code of the installation content are linked together via name fields within both objects, which name fields contain a vendor identification identifying the vendor of the installation package. With reference to the vendor specific certificate, the corresponding field is designated above as subject entry, whereas, with reference to the vendor specific DCF data object, the corresponding field is designated above as issuer and issuer identification, respectively. Further, the vendor specific DCF data object and the installation content are linked by the means of the hash code contained in the vendor specific DCF data object and determinable from the installation content by applying the corresponding hash function such as SHA-1 (Secure Hash Algorithm). Moreover, the vendor specific DCF data object contains the hash code in encrypted from, which requires the CEK for decrypting. The CEK forms the linkage between the vendor specific DCF data object and the vendor specific rights object, which contains the CEK. Those skilled in the art will appreciate that the linkages between the various objects form an interdependency chain, which linkages are based on data and/or information contained or obtainable from two objects each. As described above in detail, the hash code denotes in an equivalent manner a message digest of the installation content.

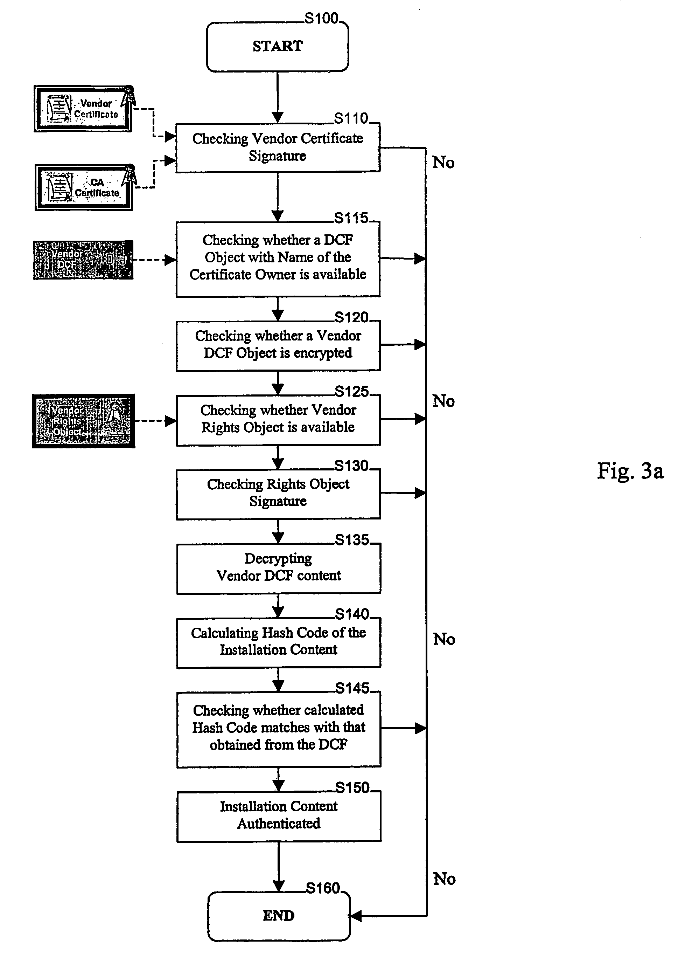

The advantage of the dependency chain will become clearer when referring to Fig. 3a, which illustrates an authenticity and integrity verification of the installation package illustrated in Figs. 2a and 2b. Fig. 3a illustrates an operational sequence diagram for authenticity and integrity verification of an installation package according to an embodiment of the present invention.

The operational sequence is illustrated on the basis of the installation package illustrated in Figs. 2a and 2b. The installation package may enable a user to install a particular application on his processor-based device, which installation of the application requires the installation content contained in the installation package. The installation as well as the authenticity and integrity verification may be operated by a distinct verification agent and verification agent, respectively. The verification agent and verification agent may be part of the installation package and operated at initiation of the installation process. Alternatively, the verification agent and/or the verification agent may be part of the operating system of the processor-based device.

In an operation S100, the installation of the installation package is initiated. At first, authenticity and integrity verification is operated to ensure the installation of original unchanged installation content contained in the installation package, which in turn ensures the installation of an original unchanged application. The installation and hence the authenticity and integrity verification is operated on the processor-based device. At first, the vendor specific certificate is checked in an operation S110. The integrity and authenticity of the vendor specific certificate is verified by the means of a root certificate of the certificate authority (CA), which has signed the vendor specific certificate. The CA certificate may be either stored on the device or may be obtainable by the device. In the first case, a secure storing of the CA certificate has to be considered to prevent unauthorized exchange of the CA certificate. In the latter case, the vendor specific certificate may contain a CA identification (issuer, issuer identification), a CA address information (issuer URL), and the like, which enable to obtain the CA certificate for verification. The signature of the vendor specific certificate is check with the public key of the CA as described above. In case of a valid signature, the integrity and authenticity of the content contained in the vendor specific certificate is assumed.

The vendor identification (subject) is extracted from the authenticated vendor specific certificate, which links the vendor specific certificate to the vendor specific DCF data object. It is checked on the basis of the extracted vendor identifier in an operation S115 whether a corresponding DCF data object, i.e. a DCF data object which contains the vendor identifier, i.e. which originates from the vendor, is available. In case the vendor DCF data object is available, in a next operation S120, the vendor specific DCF data object is examined and it is checked whether the content part of the vendor specific DCF data object is encrypted.

The invention herewith features an encryption of the vendor specific DCF data object and a system check whether the encryption is actually there. This aspect represents a deviation from the usual DRM implementation for security reasons. A system equipped with DRM can usually handle OMA DRM protected files, but can also process unprotected data. If a DRM protected file is converted into an unprotected by unauthorized access (hacking) the system generally does not take notice and processes the unprotected file. The encryption of the vendor specific DCF into encrypted format as requested by the invention and checked by the system ensures that the system recognizes the complete removal of DRM protection from an installation packet and may refuse execution of such an application. Thereby the presence of a rights object (license) is implicitely necessitated even if all files (data) are provided in the plain format.

The detection of an encrypted content of the vendor specific DCF data object, is followed by an operation S125, in which it is tested whether a corresponding vendor specific rights object. The corresponding vendor specific rights object can be identified on the basis of an issuer identification contained in the vendor specific rights object and it can be check whether the CEK contained in the vendor specific rights object matches such that decrypting of the hash code contained in the vendor specific DCF data object is possible; i.e. only the valid CEK enables the encryption of the hash code being included as protected content, i.e. encrypted with the CEK, in the vendor specific DCF data object. Additionally, the signature included in the vendor specific DCF data object enables to verify the integrity and authenticity of the vendor specific DCF data object by the means of the vendor specific certificate, in an operation S130.

Now, all objects within the dependency chain have been identified and the chaining of the objects by means of information contained in the objects ensures that a final integrity and authenticity verification of the installation content is based on trustworthy data, which originate from one or more trusted and authenticated sources, wherein the objects include the aforementioned objects of vendor specific certificate, vendor specific DCF data object and vendor specific rights object.

In an operation S135, the protected content included in the vendor specific DCF data object is decrypted to obtain the hash code included therein in an encrypted form. The decrypting is operable with the CEK, which is extracted from the corresponding vendor specific rights object. Next in an operation S140, the hash code of the installation code is determined. The type of hash code algorithm used for determining the hash code of the installation content my be pre-defined or may be coded as an information within the vendor specific DCF data object or any other one of the objects involved in the present invention.

In an operation S145, the decrypted hash code and the determined / calculated hash code are compared with each other. In case of matching the installation content is authenticated, i.e. the source of the installation content is identified as those identified by the vendor specific certificate, and the integrity of the installation content is guaranteed. The authenticity and integrity verification is completed and the installation process can be preceded with the actual installation of the application on the basis of the installation content.

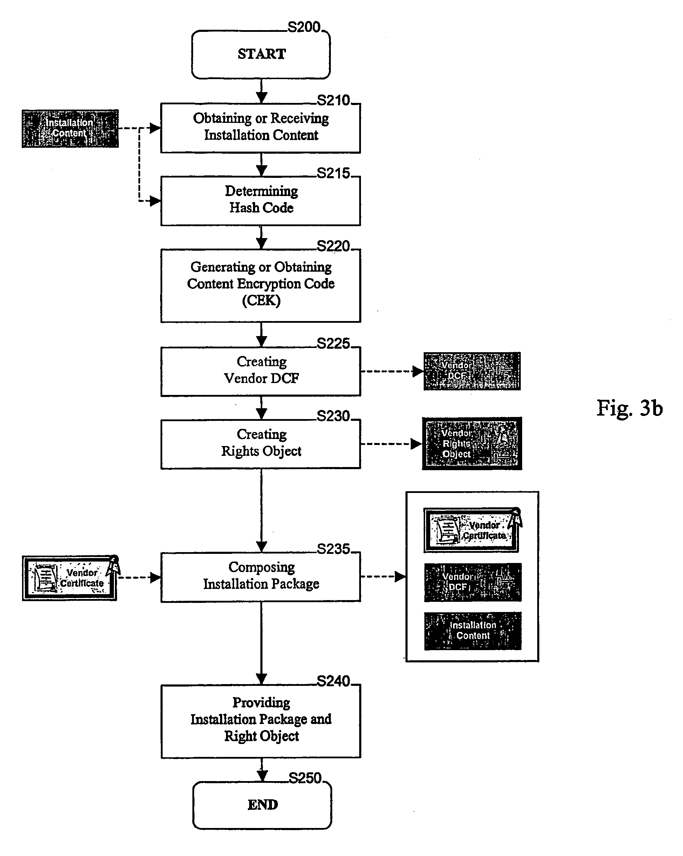

With reference to Fig. 3b, an operational sequence relating to the composition and provision of the installation package according to an embodiment of the present invention is illustrated. The operational sequence of Fig. 3b may be operated by the vendor or by any other entity on behalf of the vendor or the originator of the application. The aim of the operational sequence in Fig. 3b is to provide an installation package in the form, for instance illustrated exemplarily in Fig. 2b, which enables to install an application on a processor-based device, at which the installation package is processed. In an operation S200, the process for composing the installation package is started. Firstly in an operation S210, the installation content, which enables the installation of the application is provided or obtained. The installation content may for instance be provided by the originator of the application or the rights holder on the application. In a following operation S215, the hash code is determined from the installation content. The hash code is obtained by applying a hash code algorithm on the installation content, which application results in the desired hash code. Several hash code algorithms are available; a suitable algorithm may be pre-defined and/or the hash code algorithm employed may be included as information into one of the objects within the installation package, which obtainment is the aim of the currently described operational sequence. In a next operation S220, a content encryption key is generated, provided, or obtained such that, in a following operation S225, the vendor specific DCF data object can be created. The vendor specific DCF data object may be structured in accordance with the description above, where the vendor specific DCF data object includes an issuer (creator) identity identifying the vendor, who has created the vendor specific DCF data object, and the hash code, which is included as protected content, which means that the hash code is encrypted by the means of the content encryption key (CEK) and a encryption algorithm such as the AES symmetric encryption algorithm. In association with the vendor specific DCF data object the corresponding vendor specific rights object is generated in an operation S230. The structure of the vendor specific rights object is described above in detail. The vendor specific rights object includes at least an issuer / creator identifier, herein the vendor identifier and the CEK employed for encrypting the hash code forming the protected content of the vendor specific DCF data object. Furthermore, the vendor specific rights object is signed by the generator / creator in order to authenticate the origin of the vendor specific rights object and to enable integrity verification thereof.

In addition, the content encryption key, which is employed for decrypting the encrypted hash code in order to obtain a plaintext hash code may be verified to ensure that the content encryption key (CEK) is a correct and valid key, respectively. For instance, the verification of the content encryption key (CEK) may be based on a verification of the decrypted hash code, of which a message digest is included in the vendor specific DCF data object. In analogy, any other kind of check information may be included in the vendor specific DCF data object, which is suitable to be compared with check information determined from the (encrypted and plaintext, respectively) hash code on the basis of a pre-defined check algorithm.

Both the vendor specific DCF data object and the vendor specific rights object may include a common content identifier, which identifies the association between the vendor specific DCF data object and the corresponding accompanying vendor specific rights object. The content identifier may be a unique content identifier such that the vendor specific DCF data object and the vendor specific rights object are assignable uniquely to each other. In general, the associated vendor specific rights object may be identified on the basis of an association information, which can comprise any information being included in both the vendor specific rights object and the vendor specific DCF data object, which objects can be considered as a "key / lock object pair". This means, the association information may likewise include information relating to the vendor, a vendor identifier, and the like.

Now the installation package can be composed in an operation S235. The composed installation package includes a vendor specific certificate, the vendor specific DCF data object and the installation content. The way of obtaining a vendor specific certificate is described above in detail and reference thereto should be given herewith. Finally, the installation package and the vendor specific rights object are prepared for distribution, which may be for instance via any network such as the internet or a public land mobile network (PLMN) allowing for data communications.

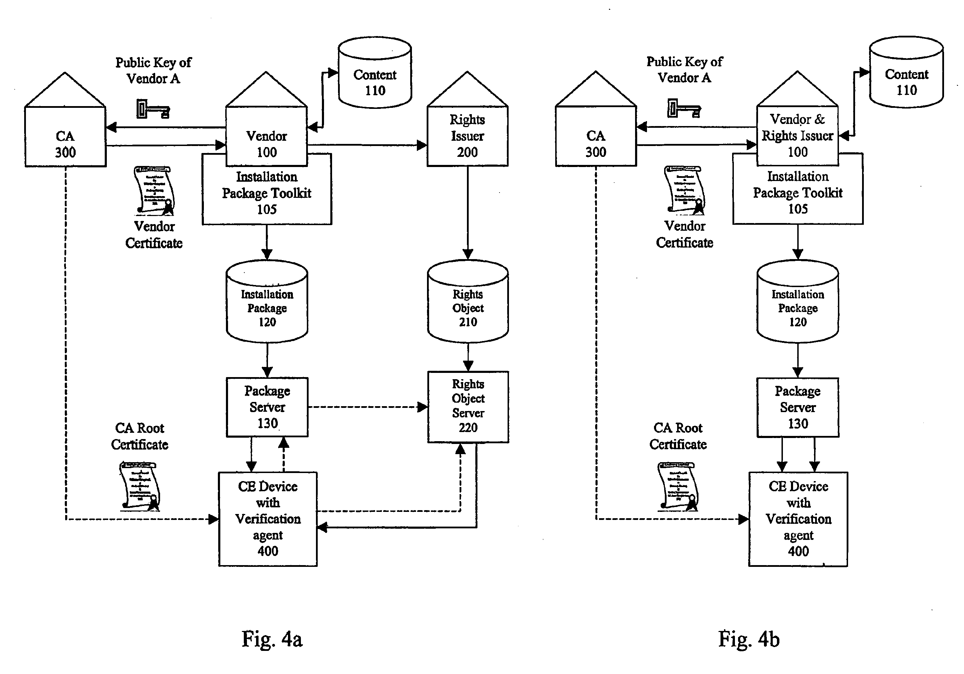

Figs. 4a and 4b illustrate systems with entities involved in embodiments of the present invention. The first embodiment shown in Fig. 4a provides for a separate delivery path of the installation package and the vendor specific rights object, whereas the second embodiment shown in Fig. 4b provides for a common delivery path of the installation package and the vendor specific rights object.

Referring firstly to Fig. 4a, the vendor entity represents the central entity, which has access to the installation content, forms the installation package and the vendor specific rights object and provides the installation package and the vendor specific rights object for distribution. The vendor entity 100, which may be realized by a specific server system, is connected to a storage, which stores the installation content 110 for being processed. The vendor entity 100 operates a installation package toolkit 105, which is preferably a software program including code sections which when executed carry out the operations for composing the installation package, which is embodied exemplarily in Fig. 3b. The installation package toolkit 105 obtains the installation content 110 from the storage and composes the installation package on the basis thereof. For composition, the installation package requires a vendor specific certificate, which is obtained from a trusted certificate authority (CA) 300. The vendor entity 100 transmits its public key of a public / private key encryption pair to the CA 300, which generates a vendor specific certificate thereof, which certificate guaranties the authenticity of the public key and further information contained therein and the integrity of the certificate. The installation package 120 including the vendor specific certificate, the vendor specific DCF data object, and the installation content is transferred to a package server system 130, which finally provides the installation package for distribution, download etc. The vendor specific rights object required for the installation package is delivered via a separate path, i.e. the vendor specific rights object, which results from the creation of the installation package is transmitted to a rights issuer entity 200, which operates a rights object server system 220 for distributing the rights objects and especially the vendor specific rights object 210 stored thereon.

The consumer electronics (CE) device 400, which is a processor-based device and on which the application should be installed by the means of the installation package, establishes for instance a communication connection to the package server system 130 and downloads the installation package. As described above the vendor specific rights object is mandatory for processing the installation package. The vendor specific rights object is provided at the rights object server system 220. Different methodologies are applicable to enable to CE device 400 to get into possession of the vendor specific rights object. In one case, the package server system 130 may indicate to the rights object server system 220 the authorized download of installation package by the CE device 400 and release the corresponding vendor specific rights object for download by the CE device 400. In another case, the package server system 130 may indicate to the rights object server system 220 the authorized download of installation package by the CE device 400 and instruct the rights object server system 220 to transfer the corresponding vendor specific rights object to the CE device, which may or may not require interaction of the CE device 400. In still another case, the package server system 130 may redirect the data communication connection between CE device 400 and package server system 130 to the rights object server system 220 to enable download of the vendor specific rights object in association with the installation package. Those skilled in the art will appreciate that various methodologies for enabling the CE device 400 to obtain the vendor specific rights object are possible. The vendor specific rights object may be obtained afterwards the downloading of the installation package for instance during the processing of the installation package. Nevertheless, those methodologies are out of the scope of the present invention and reference should be given to the Download Architecture specification of the Open Mobile Alliance (OMA-Download-ARCH), included herewith.

The CE device 400 is finally in possession of the installation package and the associated vendor specific rights object. In addition with a CA root certificate, which may be obtained from the CA entity 300 and which may be pre-stored on the CE device 400, the CE device 400, which operates for instance an verification agent is able to perform the authenticity and integrity verification, when the installation on the basis of the installation package is initiated, which procedure is embodied in Fig. 3a and described in detail with reference thereto.

With reference to Fig. 4b, an alternative and simplified system should be additionally illustrated, which is based on a combined delivery of the installation package and the associated vendor specific rights object. Accordingly, the simplified system includes the vendor entity 100, which also serve as the right issuer entity, the certificate authority (CA) 300, the package server system 130, which also serve as the rights object server system, and the CE device 400. In accordance with the above description, the vendor and rights issuer entity 100 operates an installation package toolkit, which enables creating the installation package including the installation content 110, the vendor specific certificate, and the vendor specific DCF data object and the vendor specific rights object associated with the installation package. The installation content 110 is obtainable from a storage associated with the vendor entity 100 and the combined vendor and rights issuer entity 100, respectively. The vendor specific certificate is obtainable from the CA entity 300, which generates the vendor specific certificate on the basis of the public key of the vendor entity 100, which public key is part of a public / private encryption key pair. The resulting installation package 120 and the associated vendor specific rights object are transferred to the package server system 130, which delivers both the installation package 120 and the associated vendor specific rights object to the CE device 400 in a combined manner, for instance on a request for download originated from the CE device 400.

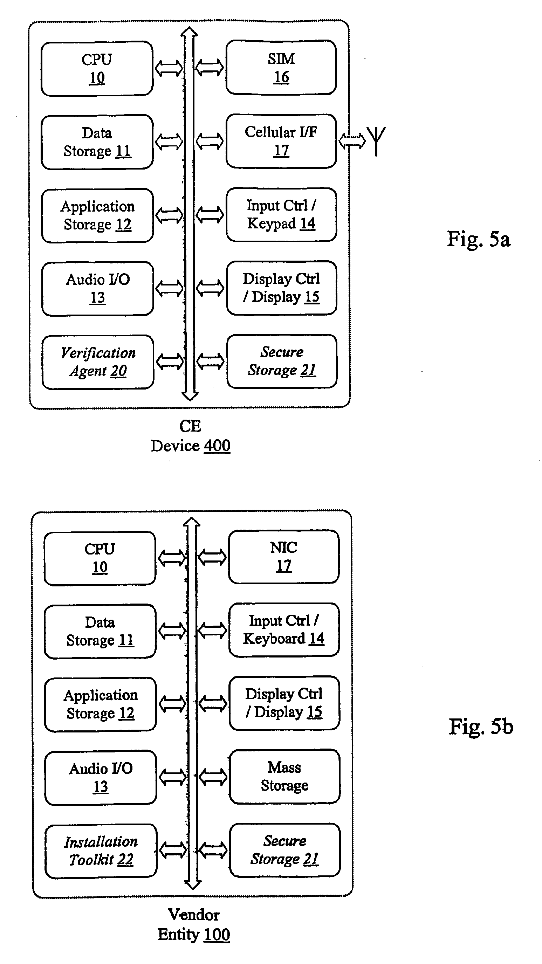

With reference to Figs. 5a and 5b block diagrams of an embodiment of the CE device 400 and an embodiment of the vendor entity 400 are depicted and briefly described in the following with reference thereto.

The block diagram of Fig. 2a illustrates a principle structure design of a cellular terminal, which should exemplary represent any kind of CE device 400, in particular portable CE device 400, in the sense of the present invention. It shall be understood that the present invention is not limited to any specific kind of CE device 400. The illustrated cellular terminal comprises typically a central processing unit (CPU) 10, a data storage 11, an application storage 12, input/output means including audio input/output (I/O) means 13, a keypad with input controller (Ctrl) 14 and a display with display controller (Ctrl) 15. A cellular interface (1/F) 17 coupled to a cellular antenna provides for an over-the-air interface, which serves in conjunction with a subscriber identification module (SIM) 16 for cellular communications with a corresponding radio access network (RAN) of a public land mobile network (PLMN).

The cellular interface (I/F) 17 is arranged as a cellular transceiver to receive signals from the cellular antenna, decodes the signals, demodulates them and also reduces them to the base band frequency. The output of the cellular interface (I/F) 17 thus consists of a stream of data that may require further processing by the central processing unit (CPU) 10. The cellular interface (I/F) 17 arranged as a cellular transceiver also receives data from the central processing unit (CPU) 10, which are to be transmitted via the over-the-air interface to the radio access network (RAN). Therefore, the cellular interface (I/F) 17 encodes, modulates and up converts the signal to the radio frequency, which is to be used. The cellular antenna then transmits the resulting radio frequency signal to the corresponding radio access network (RAN) of the public land mobile network (PLMN).

The display and display controller (Ctrl) 15 are controlled by the central processing unit (CPU) 10 and provides information for the user typically by the means of a user interface. The keypad and keypad controller (Ctrl) 14 are provided to allow the user to input information. The information input via the keypad is supplied to the central processing unit (CPU) 10, which may be controlled in accordance with the input information. The audio input/output (I/O) means 13 includes at least a speaker for reproducing an audio signal and a microphone for recording an audio signal. The central processing unit (CPU) 10 may control the conversion of audio data to audio output signals and the conversion of audio input signals into audio data, where the audio data have a suitable format for cellular transmission.

For operation in accordance with the present invention, the CE device 400 may comprise a verification agent 20 and a secure storage 21. The verification agent, which may alternatively be implemented as a digital rights management (DRM) agent, serves for processing the installation package in the above described manner; refer to Fig. 3a and the description referring thereto. The secure storage 21 may be applied for storing sensitive information or information, which has to be protected against any (unauthorized) modifications. The secure storage 21 may be particularly used to store the CA certificate, which is required for verification of the vendor specific certificate.

It should be noted that with reference to the embodiment of Fig. 5a, the verification agent 20, which performs at least the authenticity and integrity verification in accordance with the present invention, is embodied as a functionality of the CE device 400, which means that the verification agent 20 is preferably a functionality of the operating system being operated on the CE device 400. Such an integrated verification agent may be advantageous in view of the code size of the installation package, which makes use thereof during verification. Alternatively, the verification agent 20 may be part of the installation package itself, which included executable code for performing the installation process of the application obtained from the installation content of the installation package and the verification process.

Fig. 5b illustrates a block diagram of the operating environment employed by the vendor entity or any other entity for composing the installation package and the associating vendor specific rights object. Typically, the environment embodied in Fig. 5b shows a conventional computer system, which comprises a CPU 10, a data storage 11, an application storage 12 and input / output means in form of an audio input / output (I/O) means 13, an input controller connected to a keyboard 14 (and a mouse, not shown) and a display controller connected to a display 15. The computer system comprises conventionally also one or more mass storages 16, which may comprise one_{'}or more hard disk drives, one or more optical disk drives (such as CD-ROM drive, DVD drive both with reading and/or writing capabilities) Conventional computer system include one or more flexible data bus systems for connecting additional hardware thereto, especially a network interface card (NIC) 17. The flexible concept of conventional computer systems allows several specific variations of the computer systems. The network interface card (NIC) 17 or any equivalent connects the embodied computer system to data communication networks, which may include for instance the wire-based Internet but also wireless and especially cellular networks (which access thereto may require additional network entities such as gateways).

The processor-based computer system of the vendor entity 100 enables the carrying out of software including code sections. Especially, the computer system is designed to operate an installation package toolkit 22, which operation is described above in detail; refer to Fig. 3b and the description referring thereto. The secure storage 21 may be applied for storing sensitive information or information, which has to be protected against any (unauthorized) modifications. The secure storage 21 may be particularly used to store the private key of the vendor, the unprotected installation content, the vendor specific certificate, etc, which are required for the installation package composition procedure.

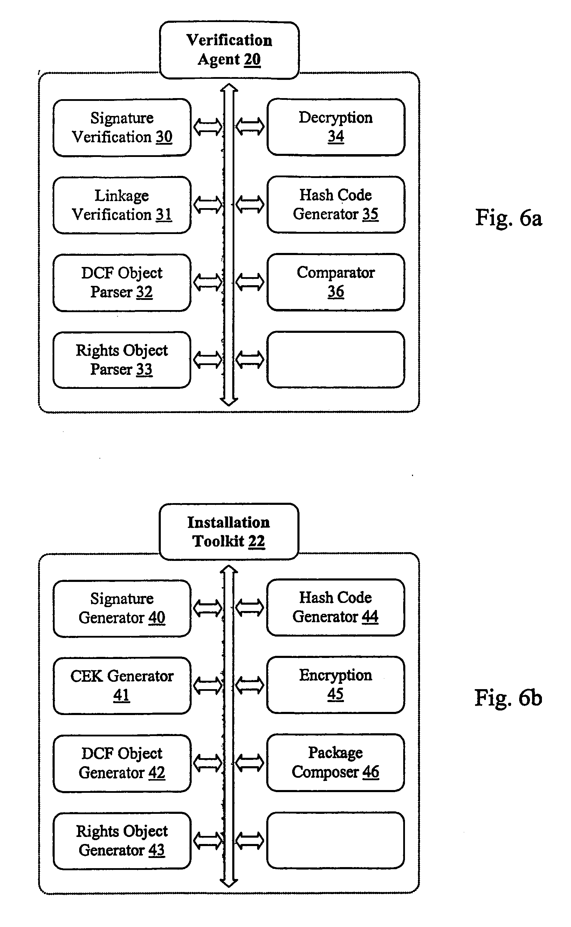

Fig. 6a illustrates a block diagram of the verification agent 20 according to an embodiment of the present invention. As aforementioned, the verification agent 20 illustrated herein is implemented to enable the method for authenticity and integrity verification of an installation package in accordance with an embodiment of the invention, where an exemplary method is illustrated with reference to Fig. 3a, where an exemplary installation package is illustrated with reference to Figs. 2a and 2b. Back reference to the Figs. 3a, 2a, and 2b will be given for detailed description of the illustrated block diagram of the verification agent 20.

The illustrative verification agent 20 is composed of several modules, which may represent independent modules, code sections, application program interfaces (APIs), linkable library functions, classes and the like, which when executed on a processor-based device enable operations required for carrying out the method for authenticity and integrity verification according to an embodiment of the invention. The illustrated verification agent 20 comprises a signature verification module 30, a linkage verification module 31, a DCF object parser 32, a rights object parser 33, a decryption module 34 (or decryptor), a hash code generator 35, and a comparator 36.

The signature verification module 30 is adapted to enable verification of the vendor certificate signature on the basis of the CA root certificate, which is described in detail with reference to operation S110 (cf. Fig. 3a). The signature verification module 30 is further adapted to enable verification of the signature of the vendor specific rights object, which is preferably signed by the vendor, i.e. comprises a signature generated by the vendor with the help of its (vendor specific) private key. Refer also to operation S130 described with reference to Fig. 3a. The corresponding public key required for signature verification can be obtained from the vendor specific certificate. Alternatively, the vendor specific rights object may be signed by another entity, in particular the rights issuer entity. However, the verification of such a signature (generated by an entity different from the vendor entity) requires a corresponding certificate or at least a corresponding public key, which may require additionally a verification of the corresponding certificate or the corresponding public key of the signing entity, which verification may be performed in analogy to the verification of the vendor specific certificate.

The linkage verification 31 is adapted to verify whether a vendor specific DCF data object and whether a vendor specific rights object is available. The verification of the availability of the vendor specific DCF data object is based on the linkage between vendor specific certificate and vendor specific DCF data object, whereas the verification of the availability of the vendor specific rights object is based on the association between the vendor specific DCF data object and the vendor specific rights object. The linkage verification 31 is further adapted to verify the linkage between the vendor specific DCF data object and the vendor specific rights object, which is based on the content encryption key (CEK), which enables a valid decryption of the hash code being contained as protected content in the vendor specific DCF data object, which protection is obtained by encrypting with the content encryption key (CEK). Refer also to operations S115, S120, and S125 described with reference to Fig. 3a

The DCF data object parser 32 and the rights object parser 33 are adapted to parse and extract the respective objects. In particular, the DCF data object parser 32 serves for extraction of the encrypted hash code from the vendor specific DCF data object and the extraction of the linkage information for linkage verification. The rights object parser 33 serves for extraction of the content encryption key, and, if required, the extraction of the association information as well as the signature.

The decryption module 34 (or decryptor) enables the decryption of the encrypted hash code to obtain plaintext hash code. The hash code generator 35 implements a hash code algorithm, which is applicable on the installation content to obtain a hash code of the installation content. The comparator 36 is adapted for comparing the encrypted hash code originating from the vendor specific rights object and the generated hash code obtained from application of the hash code algorithm on the installation content. The result of the comparator represents finally the authenticity and integrity verification result. In case of matching hash codes, the authenticity and integrity verification is confirmed.

Fig. 6b illustrates a block diagram of the installation package toolkit 22 according to an embodiment of the present invention. As aforementioned, the installation package toolkit 22 illustrated herein is implemented to enable the method for creating an installation package enabling authenticity and integrity verification in accordance with an embodiment of the invention, where an exemplary method is illustrated with reference to Fig. 3b, where an exemplary installation package is illustrated with reference to Figs. 2a and 2b. Back reference to the Figs. 3b, 2a, and 2b will be given for detailed description of the illustrated block diagram of the installation package toolkit 22.

The illustrative installation package toolkit 22 is composed of several modules, which may represent independent modules, code sections, application program interfaces (APIs), linkable library functions, classes and the like, which when executed on a processor-based device enable operations required for carrying out the method for creating an installation package enabling authenticity and integrity verification according to an embodiment of the invention. The illustrated installation package toolkit 22 comprises a signature generator 40, a CEK generator 41, a DCF data object generator 42, a rights object generator 43, a hash code generator 44, an encryption module 45 (or encryptor), and a package composer 46.

The hash code generator 44 implements a hash code algorithm, which is applicable on the installation content to obtain a hash code of the installation content. The CEK generator in conjunction with the encryption module 45 (or encryptor) allows for encryption the hash code of the installation content with the content encryption key (CEK). Refer to operations S215 and S220 of Fig. 3b.

The DCF data object generator 42 and the rights object generator 43 are adapted for generating the respective objects, which generation is described with reference to operations S225 and S230 of Fig. 3b. In particular, the DCF data object generator 42 serves to embed to encrypted hash code into the protected content of the vendor specific DCF data object and includes the information required for association. The rights object generator 43 generates the vendor specific rights object, which contains the content encryption key (CEK) for recovering the hash code from the vendor specific DCF data object and the linkage information, linking between the vendor specific certificate and the vendor specific DCF data object. The signature generator 40 enables to digitally sign the vendor specific rights object by including a signature therein. The signature generator 40 uses for generating the signature a corresponding public key, in particular the vendor specific punk key of the public / private encryption key pair of the vendor entity.

The package composer 46 is adapted to finally compose, combine and form the installation package, respectively, an embodiment of which installation package is illustrated with reference to Figs. 2a and 2b.

## Claims

1. Method implemented in a computer, wherein a content package comprises at least an originator specific certificate, an access limited data object and data content to be verified for authenticity and integrity,
wherein said originator specific certificate and said access limited data object are linked together via first linkage information, which establishes a first linkage between said originator specific certificate and said access limited data object,
wherein said access limited data object and said data content are linked together via second linkage information, which establishes a second linkage between said access limited data object and said data content,
said method comprising:
- extracting (S115) said first linkage information from said originator specific certificate, wherein said first linkage information is at least one of an information relating to an originator or an originator identifier;
- checking (S 115) whether said first linkage information links to said access limited data object including corresponding first linkage information;
- extracting (S125, S 135) a hash code from said access limited data object, which hash code serves as said second linkage information; and
- verifying (S 145) said extracted hash code against a determined hash code, which is determined on the basis of said data content and in accordance with a hash algorithm, which verifying includes:
- verifying said second linkage; and
- verifying authenticity and integrity of said data content.

2. Method according to claim 1, wherein said content package is associated with a rights object, which contains a content encryption key,
wherein said access limited data object contains said hash code in an encrypted form requiring said content encryption key for decrypting,
wherein said extracting said hash code from said access limited data object comprises:
- decrypting said hash code with the help of said content encryption key.

3. Method according to claim 1 or claim 2, wherein said content encryption key serves as a third linkage information, which establishes a third linkage between said rights object and said access limited data object.

4. Method according to claim 2 or claim 3, comprising:
- checking whether said associated rights object is available.

5. Method according to claim 4, wherein said checking said availability of said associated rights object comprises:
- identifying said associated rights object on the basis of information being contained in said access limited data object and said rights object, wherein said contained information include at least one of an information relating to the content, a content identifier, an information relating to the originator, and an originator identifier.

6. Method according to anyone of the preceding claims, comprising:
- checking said originator specific certificate against a trusted root certificate in order to ensure authenticity and integrity of said originator specific certificate.

7. Method according to anyone of the claims 2 to 6 , where said rights object is digitally signed by the means of a signature,
said method comprising:
- checking said signature of said rights object with a corresponding certificate including at least one of an originator specific certificate and a rights issuer specific certificate, which rights issuer issues said rights object.

8. Method according to anyone of the preceding claims, wherein said first linkage information is contained in both said originator specific certificate and said access limited data object.

9. Method according to anyone of the preceding claims, wherein said content package is an installation package including installation content as said data content, which installation content enables to install an application on a processor-based device for being executed thereon.

10. Method according to anyone of the claims 2 to 9, comprising:
- verifying said content encryption key to ensure that the content encryption key is applicable for decrypting said hash code.

11. Method implemented in a computer, comprising:
- providing (S210) a data content to be verified for authenticity and integrity;
- determining (S215) a hash code from said data content in accordance with a hash code algorithm;
- providing (S220) an originator specific certificate;
- creating (S225) an access limited data object including said hash code and a first linkage information,
wherein said first linkage information links said originator specific certificate and said access limited data object together and which first linkage information establishes a first linkage between said originator specific certificate and said access limited data object, wherein said first linkage information is at least one of an information relating to an originator or an originator identifier,
wherein said hash code serves as second linkage information, which second linkage information links said access limited data object and said data content together and which second linkage information establishes a second linkage between said access limited data object and said data content; and
- composing (S235) said originator specific certificate, said access limited data object, and said data content to form a content package for distribution (S240).

12. Method according to claim 11, comprising:
- creating a rights object, which contains a content encryption key,
wherein said content encryption key is employed for encrypting said hash code,
wherein said hash code is included in said access limited data object in an encrypted form.

13. Method according to claim 11 or claim 12, wherein said content encryption key serves as a third linkage information, which establishes a third linkage between said rights object and said access limited data object.

14. Method according to claim 12 or claim 13, comprising:
- including information in said rights object, on the basis of which said rights object is identifiable, wherein said information include at least one of an information relating to the content, a content identifier, an information relating to the originator, and an originator identifier.

15. Method according to anyone of the claims 12 to 14, comprising:
- digitally signing said rights object by the means of a signature.

16. Method according to anyone of the claims 11 to 15, wherein said first linkage information is contained in both said originator specific certificate and said access limited data object.

17. Method according to anyone of the claims 11 to 16, wherein said content package is an installation package including installation content as said data content, which installation content enables to install an application on a processor-based device for being executed thereon.

18. Computer program product comprising program code sections for carrying out the steps of anyone of claims 1 to 17, when said program code sections are run on a controller, processor-based device, a computer, a microprocessor based device, a terminal, a network device, a mobile terminal or a mobile communication enabled terminal.

19. Computer program product according to claim 18, wherein said program code sections are stored on a machine-readable medium.

20. Computer program product according to claim 18, wherein said program code sections are embodied in a carrier wave.

21. Computer program product according to claim 18, wherein said program code sections are part of said content package.

22. Verification apparatus, wherein a content package comprises at least an originator specific certificate, an access limited data object and data content to be verified for authenticity and integrity,
wherein said originator specific certificate and said access limited data object are linked together via a first linkage information, which establishes a first linkage between said originator specific certificate and said access limited data object;
wherein said access limited data object and said data content are linked together via a second linkage information, which establishes a second linkage between said access limited data object and said data content;
said apparatus comprising:
- a certificate parser (37), which is adapted to extract said first linkage information from said originator specific certificate, wherein said first linkage information is at least one of an information relating to an originator or an originator identifier;
- a DRM Content Format data object parser (32), which is adapted to extract said first linkage information and a hash code from said access limited data object, which hash code serves as second linkage information;
- a linkage verification module (31), which is adapted to compare said first linkage information, extracted for said originator specific certificate and said access limited data object, for linkage verification;
- a hash code generator (35), which is adapted to determine a hash code from said data content in accordance with a hash algorithm; and
- a comparator (36), which is adapted to compare said hash codes extracted from said access limited data object and determined on the basis of said data content to enable verification of said second linkage and authenticity and integrity verification of said data content.

23. Verification apparatus according to claim 22, wherein said verification apparatus is implemented in a consumer electronic device and in particular a processor-based consumer electronic device (400).

24. Generator apparatus,
said apparatus comprising:
- a hash code generator (44), which is adapted to determine a hash code from a data content in accordance with a hash code algorithm;
- a DRM Content Format data object generator (42), which is adapted to create an access limited data object including said hash code and a first linkage information,
wherein said first linkage information links said originator specific certificate and said access limited data object together and which first linkage information establishes a first linkage between said originator specific certificate and said access limited data object, wherein said first linkage information is at least one of an information relating to an originator or an originator identifier,
wherein said hash code serves as second linkage information, which second linkage information links said access limited data object and said data content together and which second linkage information establishes a second linkage between said access limited data object and said data content; and
- a package composer (46), which is adapted to compose an originator specific certificate, said access limited data object, and said data content to form a content package for distribution, where said originator specific certificate is provided for inclusion.

25. Generator apparatus according to claim 24, wherein said generator apparatus is implemented in a sever system entity and in particular a processor-based server system entity (100).

26. System, comprising at least a generator apparatus and a verification apparatus, where said generator apparatus is a generator apparatus in accordance with anyone of the claims 24 to 25, and said verification apparatus is a verification apparatus in accordance with anyone of the claims 22 to 23.

## Patentansprüche

1. Verfahren, das in einem Computer implementiert ist, wobei ein Inhaltspaket mindestens ein urheberspezifisches Zertifikat, ein zugriffsbeschränktes Datenobjekt und einen Dateninhalt, um hinsichtlich Authentizität und Integrität verifiziert zu werden, umfasst, wobei das urheberspezifische Zertifikat und das zugriffsbeschränkte Datenobjekt über eine erste Verknüpfungsinformation miteinander verknüpft sind, die eine erste Verknüpfung von dem urheberspezifischen Zertifikat und dem zugriffsbeschränkten Datenobjekt etabliert,
wobei das zugriffsbeschränkte Datenobjekt und der Dateninhalt über eine zweite Verknüpfungsinformation miteinander verknüpft sind, die eine zweite Verknüpfung von dem zugriffsbeschränkten Datenobjekt und dem Dateninhalt etabliert,
wobei das Verfahren umfasst:
- Extrahieren (S115) der ersten Verknüpfungsinformation aus dem urheberspezifischen Zertifikat, wobei die erste Verknüpfungsinformation mindestens eine von einer Information betreffend einen Urheber oder eine Urheberkennung ist;
- Überprüfen (S115), ob die erste Verknüpfungsinformation mit dem zugriffsbeschränkten Datenobjekt verknüpft, das eine entsprechende erste Verknüpfungsinformation umfasst;
- Extrahieren (S 125, S135) eines Hashcodes aus dem zugriffsbeschränkten Datenobjekt, wobei der Hashcode als die zweite Verknüpfungsinformation dient; und
- Verifizieren (S145) des extrahierten Hashcodes mit einem bestimmten Hashcode, der auf der Basis des Dateninhalts und gemäß einem Hashalgorithmus bestimmt wird, wobei das Verifizieren einschließt:
- Verifizieren der zweiten Verknüpfung; und
- Verifizieren von Authentizität und Integrität des Dateninhalts.

2. Verfahren gemäß Anspruch 1, wobei das Inhaltspacket mit einem Rechteobjekt assoziiert ist, das einen Inhaltsverschlüsselungsschlüssel enthält,
wobei das zugriffsbeschränkte Datenobjekt einen Hashcode in einer verschlüsselten Form enthält, der zum Entschlüsseln den Inhaltsverschlüsselungsschlüssel benötigt,
wobei das Extrahieren des Hashcodes aus dem zugriffsbeschränkten Datenobjekt umfasst:
- Entschlüsseln des Hashcodes mit der Hilfe des Inhaltsverschlüsselungsschlüssels.

3. Verfahren gemäß Anspruch 1 oder Anspruch 2, wobei der Inhaltsverschlüsselungsschlüssel als eine dritten Verknüpfungsinformation dient, die eine dritten Verknüpfung von dem Rechteobjekt und dem zugriffsbeschränkten Datenobjekt etabliert.

4. Verfahren gemäß Anspruch 2 oder Anspruch 3, umfassend:
- Überprüfen, ob das assoziierte Rechteobjekt verfügbar ist.

5. Verfahren gemäß Anspruch 4, wobei das Überprüfen der Verfügbarkeit des assoziierten Rechteobjekts umfasst:
- Identifizieren des assoziierten Rechteobjekts auf der Basis einer Information, die in dem zugriffsbeschränkten Datenobjekt und dem Rechteobjekt enthalten ist,
wobei die beinhaltete Information mindestens eine von einer Information betreffen den Inhalt, eine Inhaltskennung, eine Information betreffend den Urheber und eine Urheberkennung einschließt.

6. Verfahren gemäß einem der vorstehenden Ansprüche, umfassend:
- Überprüfen des urheberspezifischen Zertifikats mit einem vertrauenswürdigen Stammzertifikat, um Authentizität und Integrität des urheberspezifischen Zertifikats sicherzustellen.

7. Verfahren gemäß einem der Ansprüche 2 bis 6, wobei das Rechteobjekt mittels einer Signatur digital signiert ist,
wobei das Verfahren umfasst:
- Überprüfen der Signatur des Rechteobjekts mit einem entsprechenden Zertifikat, das mindestens eines von einem urheberspezifischen Zertifikat und einem rechteaustellerspezifischen Zertifikat einschließt, wobei der Rechteaussteller das Rechteobjekt ausstellt.

8. Verfahren gemäß einen der vorstehenden Ansprüche, wobei die erste Verknüpfungsinformation in sowohl dem urheberspezifischen Zertifikat als auch dem zugriffsbeschränkten Datenobjekt enthalten ist.

9. Verfahren gemäß einem der vorstehenden Ansprüche, wobei das Inhaltspacket ein Installationspacket ist, das einen Installationsinhalt als Dateninhalt einschließt, wobei der Installationsinhalt ermöglicht, eine Anwendung auf einer prozessorbasierenden Vorrichtung zu installieren, um darauf ausgeführt zu werden.

10. Verfahren gemäß einem der Ansprüche 2 bis 9, umfassend:
- Verifizieren des Inhaltsverschlüsselungsschlüssels, um sicherzustellen, dass der Inhaltsverschlüsselungsschlüssel zum Entschlüsseln des Hashcodes anwendbar ist.

11. Verfahren, das in einem Computer implementiert ist, umfassend:
- Bereitstellen (S210) eines Dateninhalts, um hinsichtlich Authentizität und Integrität verifiziert zu werden;
- Bestimmen (S215) eines Hashcodes von dem Dateninhalt gemäß eines Hashcodealgorithmus;
- Bereitstellen (S220) eines urheberspezifischen Zertifikats;
- Erzeugen (S225) eines zugriffsbeschränkten Datenobjekts, das den Hashcode und eine erste Verknüpfungsinformation einschließt,
wobei die erste Verknüpfungsinformation das urheberspezifische Zertifikat und das zugriffsbeschränkte Datenobjekt miteinander verknüpft und wobei die erste Verknüpfungsinformation eine erste Verknüpfung von dem urheberspezifischen Zertifikat und dem zugriffsbeschränkten Datenobjekt etabliert, wobei die erste Verknüpfungsinformation mindestens eine von einer Information betreffend einen Urheber oder eine Urheberkennung ist,
wobei der Hashcode als eine zweite Verknüpfungsinformation dient, wobei die zweite Verknüpfungsinformation das zugriffsbeschränkte Datenobjekt und den Dateninhalt miteinander verknüpft und wobei die zweite Verknüpfungsinformation eine zweite Verknüpfung von dem zugriffsbeschränkten Datenobjekt und dem Dateninhalt etabliert; und
- Zusammenfassen (S235) des urheberspezifischen Zertifikats, des zugriffsbeschränkten Datenobjekts und des Dateninhalts, um ein Inhaltspacket zur Distribution (S240) zu bilden.

12. Verfahren gemäß Anspruch 11, umfassend:
- Erzeugen eines Rechteobjekts, das einen Inhaltsverschlüsselungsschlüssel enthält,
wobei der Inhaltsverschlüsselungsschlüssel zum Verschlüsseln des Hashcodes verwendet wird, wobei das Hashcode in dem zugriffsbeschränkten Datenobjekt in einer verschlüsselten Form umfasst ist.

13. Verfahren gemäß Anspruch 11 oder Anspruch 12, wobei der Inhaltsverschlüsselungsschlüssel als eine dritte Verknüpfungsinformation dient, die eine dritte Verknüpfung von dem Rechteobjekt und dem zugriffsbeschränkten Datenobjekt etabliert.

14. Verfahren gemäß Anspruch 12 oder Anspruch 13, umfassend:
- Einfügen einer Information in das Rechteobjekt, auf deren Basis das Rechteobjekt identifizierbar ist, wobei die Information mindestens eine von einer Information betreffend den Inhalt, eine Inhaltskennung, einer Information betreffend den Urheber und eine Urheberkennung einschließt.

15. Verfahren gemäß einem der Ansprüche 12 bis 14, umfassend:
- digitales Signieren des Rechteobjekts mittels einer Signatur.

16. Verfahren gemäß einem der Ansprüche 11 bis 15, wobei die erste Verknüpfungsinformation in sowohl dem urheberspezifischen Zertifikat als auch dem zugriffsbeschränkten Datenobjekt enthalten ist.

17. Verfahren gemäß einem der Ansprüche 11 bis 16, wobei das Inhaltspaket ein Installationspacket ist, das einen Installationsinhalt als Dateninhalt einschließt, wobei der Installationsinhalt ermöglicht, eine Anwendung auf einer prozessorbasierenden Vorrichtung zu installieren, um darauf ausgeführt zu werden.

18. Computerprogrammprodukt, das Programmcodeabschnitte umfasst, um die Schritte von einem der Ansprüche 1 bis 17 auszuführen, wenn die Programmcodeabschnitte auf einer prozessorbasierenden Vorrichtung, einer mobilen Endvorrichtung oder einer zur Mobilkommunikation befähigten Endvorrichtung ausgeführt werden.

19. Computerprogrammprodukt gemäß Anspruch 18, wobei die Programmcodeabschnitte auf einem maschinenlesbaren Medium gespeichert sind.

20. Computerprogrammprodukt gemäß Anspruch 18, wobei die Programmcodeabschnitte auf einer Trägerwelle verkörpert sind.

21. Computerprogrammprodukt gemäß Anspruch 18, wobei die Programmcodeabschnitte Teil des Inhaltspakets sind.

22. Verifikationsvorrichtung, wobei ein Inhaltspaket mindestens ein urheberspezifisches Zertifikat, ein zugriffsbeschränktes Datenobjekt und einen Dateninhalt, um hinsichtlich Authentizität und Integrität verifiziert zu werden, umfasst,
wobei das urheberspezifische Zertifikat und das zugriffsbeschränkte Datenobjekt über eine erste Verknüpfungsinformation miteinander verknüpft sind, die eine erste Verknüpfung von dem urheberspezifisches Zertifikat und dem zugriffsbeschränkten Datenobjekt etabliert,
wobei das zugriffsbeschränkte Datenobjekt und der Dateninhalt über eine zweite Verknüpfungsinformation miteinander verknüpft sind, die eine zweite Verknüpfung von dem zugriffsbeschränkten Datenobjekt und dem Dateninhalt etabliert,
wobei die Vorrichtung umfasst:
- einen Zertifikatparser (37), der angepasst ist, die erste Verknüpfungsinformation aus dem urheberspezifischen Zertifikat zu extrahieren, wobei die erste Verknüpfungsinformation mindestens eine von einer Information betreffend einen Urheber oder eine Urheberkennung ist;
- einen DRM-Inhaltsformat-Datenobjektparser (32), der angepasst ist, die erste Verknüpfungsinformation und einen Hashcode aus dem zugriffsbeschränkten Datenobjekt zu extrahieren, wobei der Hashcode als zweite Verknüpfungsinformation dient;
- ein Verknüpfungsverifikationsmodul (31), das angepasst ist, die erste Verknüpfungsinformation, die aus dem urheberspezifischen Zertifikat und dem zugriffsbeschränkten Datenobjekt extrahiert ist, zur Verknüpfungsverifikation zu vergleichen;
- einen Hashcodegenerator (35), der angepasst ist, einen Hashcode aus dem Dateninhalt gemäß einem Hashalgorithmus zu bestimmen; und
- einen Komparator (36), der angepasst ist, die Hashcodes, die aus dem zugriffsbeschränkten Datenobjekt extrahiert und auf der Basis des Dateninhalts bestimmt sind, zu vergleichen, um Verifikation der zweiten Verknüpfung und Authentizitäts- und Integritätsverifikation des Dateninhalts zu ermöglichen.

23. Verifikationsvorrichtung gemäß Anspruch 22, wobei die Verifikationsvorrichtung in einer Unterhaltungselektronikvorrichtung und insbesondere einer prozessorbasierenden Unterhaltungselektronikvorrichtung (400) implementiert ist.

24. Generatorvorrichtung, wobei die Vorrichtung umfasst:
- einen Hashcodegenerator (44), der angepasst ist, einen Hashcode aus einem Dateninhalt gemäß einem Hashcodealgorithmus zu bestimmen;
- einen DRM-Inhaltsformat-Datenobjektgenerator (42), der angepasst ist, ein zugriffsbeschränktes Datenobjekt zu erzeugen, das einen Hashcode und eine erste Verknüpfungsinformation einschließt,
wobei die erste Verknüpfungsinformation das urheberspezifische Zertifikat und das zugriffsbeschränkte Datenobjekt miteinander verknüpft und wobei die Verknüpfungsinformation eine erste Verknüpfung von dem urheberspezifischen Zertifikat und dem zugriffsbeschränkten Datenobjekt etabliert, wobei die erste Verknüpfungsinformation mindestens eine von einer Information betreffend einen Urheber oder eine Urheberkennung ist,
wobei der Hashcode als zweite Verknüpfungsinformation dient, wobei die zweite Verknüpfungsinformation das zugriffsbeschränkte Datenobjekt und den Dateninhalt miteinander verknüpft und wobei die zweite Verknüpfungsinformation eine zweite Verknüpfung von dem zugriffsbeschränkten Datenobjekt und dem Dateninhalt etabliert; und
- ein Paketzusammenfasser (46), der angepasst ist, ein urheberspezifisches Zertifikat, das zugriffsbeschränkte Datenobjekt und den Dateninhalt zusammenzufassen, um ein Inhaltspacket zur Distribution zu bilden, wobei das urheberspezifische Zertifikat zur Einfügung bereitgestellt ist.

25. Generatorvorrichtung gemäß Anspruch 24, wobei die Generatorvorrichtung in einer Serversystemeinheit und insbesondere einer prozessorbasierenden Serversystemeinheit (100) implementiert ist.

26. System, das mindestens eine Generatorvorrichtung und eine Verifikationsvorrichtung umfasst, wobei die Generatorvorrichtung eine Generatorvorrichtung gemäß einem der Ansprüche 24 bis 25 ist und die Verifikationsvorrichtung eine Verifikationsvorrichtung gemäß einem der Ansprüche 22 bis 23 ist.

## Revendications

1. Procédé mis en oeuvre dans un ordinateur, dans lequel un programme de contenu comprend au moins un certificat spécifique à un expéditeur, un objet fichier de données à accès limité et un contenu de données dont l'authenticité et l'intégrité doivent être vérifiées, dans lequel ledit certificat spécifique à un expéditeur et ledit objet fichier de données à accès limité sont liés l'un à l'autre par l'intermédiaire d'une première information de liaison, laquelle établit une première liaison entre ledit certificat spécifique à un expéditeur et ledit objet fichier de données à accès limité,
dans lequel ledit objet fichier de données à accès limité et ledit contenu de données sont liés l'un à l'autre par l'intermédiaire d'une deuxième information de liaison, laquelle établit une deuxième liaison entre ledit objet fichier de données à accès limité et ledit contenu de données, ledit procédé comportant les étapes ci-dessous consistant à :
- extraire (SI15) ladite première information de liaison dudit certificat spécifique à un expéditeur, dans lequel ladite première information de liaison est au moins un des éléments suivants : une information relative à un expéditeur ou un identifiant d'expéditeur ;
- vérifier (S115) si ladite première information de liaison est liée audit objet fichier de données à accès limité comportant la première information de liaison correspondante ;
- extraire (S125, S135) un code de hachage à partir dudit objet fichier de données à accès limité, lequel code de hachage a la fonction d'une deuxième information de liaison ; et
- vérifier (S 145) ledit code de hachage extrait par rapport à un code de hachage déterminé, lequel est déterminé sur la base dudit contenu de données et selon un algorithme de hachage, ladite étape de vérification comportant les étapes consistant à :
- vérifier ladite deuxième liaison ; et
- vérifier l'authenticité et l'intégrité dudit contenu de données.

2. Procédé selon la revendication 1, dans lequel ledit programme de contenu est associé à un objet de droits, lequel contient une clé de chiffrement de contenu,
dans lequel ledit objet fichier de données à accès limité contient ledit code de hachage dans une forme chiffrée nécessitant ladite clé de chiffrement de contenu pour réaliser un déchiffrement,
dans lequel ladite extraction dudit code de hachage à partir dudit objet fichier de données à accès limité comporte l'étape consistant à :
- déchiffrer ledit code de hachage à l'aide de ladite clé de chiffrement de contenu.

3. Procédé selon la revendication 1 ou 2, dans lequel ladite clé de chiffrement de contenu a la fonction d'une troisième information de liaison, laquelle établit une troisième liaison entre ledit objet de droits et ledit objet fichier de données à accès limité.

4. Procédé selon la revendication 2 ou 3, comportant les étapes consistant à :
- vérifier si ledit objet de droits associé est disponible.

5. Procédé selon la revendication 4, dans lequel ladite vérification de ladite disponibilité dudit objet de droits associé comporte l'étape consistant à :
- identifier ledit objet de droits associé sur la base d'informations contenues dans ledit objet fichier de données à accès limité et dans ledit objet de droits, dans lequel lesdites informations contenues comprennent au moins un des éléments suivants : une information relative au contenu, un identifiant de contenu, une information relative à l'expéditeur, et un identifiant d'expéditeur.

6. Procédé selon l'une quelconque des revendications précédentes, comportant l'étape consistant à :
- vérifier ledit certificat spécifique à un expéditeur par rapport à un certificat racine de confiance afin de garantir l'authenticité et l'intégrité dudit certificat spécifique à un expéditeur.

7. Procédé selon l'une quelconque des revendications 2 à 6, dans lequel ledit objet de droits est signé numériquement par le biais d'une signature,
ledit procédé comportant l'étape consistant à :
- vérifier ladite signature dudit objet de droits avec un certificat correspondant comportant au moins l'un parmi un certificat spécifique à un expéditeur et un certificat spécifique à un émetteur de droits, lequel émetteur de droits émet ledit objet de droits.

8. Procédé selon l'une quelconque des revendications précédentes, dans lequel ladite première information de liaison est incluse à la fois dans ledit certificat spécifique à un expéditeur et dans ledit objet fichier de données à accès limité.

9. Procédé selon l'une quelconque des revendications précédentes, dans lequel ledit programme de contenu est un programme d'installation comportant du contenu d'installation sous la forme dudit contenu de données, lequel contenu d'installation permet d'installer une application sur un dispositif à base de processeur laquelle est destinée à être exécutée sur ce dernier.

10. Procédé selon l'une quelconque des revendications 2 à 9, comportant l'étape consistant à :
- vérifier ladite clé de chiffrement de contenu afin de garantir que la clé de chiffrement de contenu est applicable en vue de déchiffrer ledit code de hachage.

11. Procédé mis en oeuvre dans un ordinateur, comportant les étapes consistant à :
- fournir (S210) un contenu de données dont l'authenticité et l'intégrité doivent être vérifiées ;
- déterminer (S215) un code de hachage à partir dudit contenu de données selon un algorithme de code de hachage ;
- fournir (S220) un certificat spécifique à un expéditeur ;
- créer (S225) un objet fichier de données à accès limité comportant ledit code de hachage et une première information de liaison,
- dans lequel ladite première information de liaison lie ledit certificat spécifique à un expéditeur et ledit objet fichier de données à accès limité l'un à l'autre et ladite première information de liaison établit une première liaison entre ledit certificat spécifique à un expéditeur et ledit objet fichier de données à accès limité, dans lequel ladite première information de liaison est au moins l'une parmi une information relative à un expéditeur ou un identifiant d'expéditeur,
- dans lequel ledit code de hachage a la fonction d'une deuxième information de liaison, laquelle deuxième information de liaison lie ledit objet fichier de données à accès limité et ledit contenu de données l'un à l'autre et laquelle deuxième information de liaison établit une deuxième liaison entre ledit objet fichier de données à accès limité et ledit contenu de données ; et
- composer (S235) ledit certificat spécifique à un expéditeur, ledit objet fichier de données à accès limité, et ledit contenu de données pour former un programme de contenu destiné à être distribué (S240).

12. Procédé selon la revendication 11, comportant les étapes consistant à :
- créer un objet de droits, lequel contient une clé de chiffrement de contenu,
dans lequel ladite clé de chiffrement de contenu est employée pour chiffrer ledit code de hachage, dans lequel ledit code de hachage est inclus dans ledit objet fichier de données à accès limité sous une forme chiffrée.

13. Procédé selon la revendication 11 ou 12, dans lequel ladite clé de chiffrement de contenu a la fonction d'une troisième information de liaison, laquelle établit une troisième liaison entre ledit objet de droits et ledit objet fichier de données à accès limité.

14. Procédé selon la revendication 12 ou 13, comportant les étapes consistant à:
- inclure des informations dans ledit objet de droits, sur la base desquelles ledit objet de droits est identifiable, dans lequel lesdites informations comportent au moins un des éléments suivants : une information relative au contenu, un identifiant de contenu, une information relative à l'expéditeur, et un identifiant d'expéditeur.

15. Procédé selon l'une quelconque des revendications 12 à 14, comportant l'étape consistant à :
- signer numériquement ledit objet de droits par le biais d'une signature.

16. Procédé selon l'une quelconque des revendications 11 à 15, dans lequel ladite première information de liaison est incluse à la fois dans ledit certificat spécifique à un expéditeur et dans ledit objet fichier de données à accès limité.

17. Procédé selon l'une quelconque des revendications 11 à 16, dans lequel ledit programme de contenu est un programme d'installation comportant du contenu d'installation sous la forme dudit contenu de données, lequel contenu d'installation permet d'installer une application sur un dispositif à base de processeur laquelle est destinée à être exécutée sur ce dernier.

18. Produit - programme informatique comportant des sections de code de programme pour mettre en oeuvre les étapes selon l'une quelconque des revendications 1 à 17, lorsque lesdites sections de code de programme sont exécutées sur un contrôleur, sur un dispositif à base de processeur, sur un ordinateur, sur un dispositif à base de microprocesseur, sur un terminal, sur un dispositif de réseau, sur un terminal mobile ou sur un terminal adapté à des communications mobiles.

19. Produit - programme informatique selon la revendication 18, dans lequel lesdites sections de code de programme sont stockées sur un support lisible par une machine.

20. Produit - programme informatique selon la revendication 18, dans lequel lesdites sections de code de programme sont intégrées dans une onde porteuse.

21. Produit - programme informatique selon la revendication 18, dans lequel lesdites sections de code de programme font partie dudit programme de contenu.

22. Appareil de vérification, dans lequel un programme de contenu comporte au moins un certificat spécifique à un expéditeur, un objet fichier de données à accès limité et un contenu de données dont l'authenticité et l'intégrité doivent être vérifiées,
dans lequel ledit certificat spécifique à un expéditeur et ledit objet fichier de données à accès limité sont liés l'un à l'autre par l'intermédiaire d'une première information de liaison, laquelle établit une première liaison entre ledit certificat spécifique à un expéditeur et ledit objet fichier de données à accès limité ;
dans lequel ledit objet fichier de données à accès limité et ledit contenu de données sont liés l'un à l'autre par l'intermédiaire d'une deuxième information de liaison, laquelle établit une deuxième liaison entre ledit objet fichier de données à accès limité et ledit contenu de données ;
ledit appareil comportant :
- un analyseur de certificat (37), lequel est apte à extraire la première information de liaison dudit certificat spécifique à un expéditeur, dans lequel ladite première information de liaison est au moins l'un des éléments parmi une information relative à un expéditeur ou un identifiant d'expéditeur ;
- un analyseur d'objets de données de format de contenu de gestion des droits numériques (DRM) (32), lequel est apte à extraire ladite première information de liaison et un code de hachage dudit objet fichier de données à accès limité, lequel code de hachage a la fonction d'une deuxième information de liaison ;
- un module de vérification de liaison (31), lequel est apte à comparer ladite première information de liaison, extraite à partir dudit certificat spécifique à un expéditeur et ledit objet fichier de données à accès limité, à des fins de vérification de liaison ;
- un générateur de code de hachage (35), lequel est apte à déterminer un code de hachage à partir dudit contenu de données selon un algorithme de hachage ; et
- un comparateur (36), lequel est apte à comparer lesdits codes de hachage extraits à partir dudit objet fichier de données à accès limité et auxdits codes de hachage déterminés sur la base dudit contenu de données, pour permettre la vérification de ladite deuxième liaison et une vérification d'authenticité et d'intégrité dudit contenu de données.

23. Appareil de vérification selon la revendication 22, dans lequel ledit appareil de vérification est mis en oeuvre dans un dispositif électronique grand public et en particulier dans un dispositif électronique grand public à base de processeur (400).

24. Appareil générateur,
ledit appareil comportant :
- un générateur de codes de hachage (44), lequel est apte à déterminer un code de hachage à partir d'un contenu de données selon un algorithme de code de hachage ;
- un générateur d'objets de données de format de contenu de gestion des droits numériques (DRM) (42), lequel est apte à créer un objet fichier de données à accès limité comportant ledit code de hachage et une première information de liaison,
- dans lequel ladite première information de liaison lie ledit certificat spécifique à un expéditeur et ledit objet fichier de données à accès limité l'un à l'autre et laquelle première information de liaison établit une première liaison entre ledit certificat spécifique à un expéditeur et ledit objet fichier de données à accès limité, dans lequel ladite première information de liaison est au moins un élément parmi une information relative à un expéditeur ou un identifiant d'expéditeur,
- dans lequel ledit code de hachage a la fonction d'une deuxième information de liaison, laquelle deuxième information de liaison lie ledit objet fichier de données à accès limité et ledit contenu de données l'un à l'autre et laquelle deuxième information de liaison établit une deuxième liaison entre ledit objet fichier de données à accès limité et ledit contenu de données ; et
- un composeur de programme (46), lequel est apte à composer un certificat spécifique à un expéditeur, ledit objet fichier de données à accès limité, et ledit contenu de données pour former un programme de contenu destiné à être distribué, où ledit certificat spécifique à un expéditeur est délivré en vue d'une inclusion.

25. Appareil générateur selon la revendication 24, dans lequel ledit appareil générateur est mis en oeuvre dans une entité de système de serveur et en particulier dans une entité de système de serveur à base de processeur (100).

26. Système, comprenant au moins un appareil générateur et un appareil de vérification, où ledit appareil générateur est un appareil générateur selon l'une quelconque des revendications 24 à 25, et ledit appareil de vérification est un appareil de vérification selon l'une quelconque des revendications 22 à 23.
